# EUROPEAN PATENT APPLICATION

(11) **EP 4 431 216 A1**
(43) Date of publication of application: **18.09.2024**
(21) Application number: 22892408.0
(22) Date of filing: 14.09.2022
(51) Int. Cl.: B23K 9/127, B23K 9/12

(54) **ARC WELDING DEVICE AND ARC WELDING METHOD**

(30) Priority: 10.11.2021 JP 2021183453
(71) Applicant: Panasonic Intellectual Property Management Co., Ltd., Osaka-shi, Osaka 571-0057 (JP)
(72) Inventor: MAENO, Masahiro, Kadoma-shi, Osaka 571-0057 (JP); OKADA, Masayuki, Kadoma-shi, Osaka 571-0057 (JP); HORI, Yasuaki, Kadoma-shi, Osaka 571-0057 (JP); OKUMA, Katsuaki, Kadoma-shi, Osaka 571-0057 (JP); NISHIHARA, Manabu, Kadoma-shi, Osaka 571-0057 (JP)
(74) Representative: Novagraaf International SA
(86) International application number: PCT/JP2022/034354
(87) International publication number: WO 2023/084907

(57) **Abstract**

The laser sensor is attached to the tip of the manipulator so that a sixth axis line of a sixth rotary joint of the manipulator passes through an irradiation region of the laser light in the workpiece.

## Description

### TECHNICAL FIELD

The present disclosure relates to an arc welding device and an arc welding method that perform arc welding by applying a welding voltage between a welding wire and a workpiece.

### BACKGROUND ART

The arc welding device disclosed in Patent Literature 1 includes a welding torch, a laser sensor, a manipulator, and a controller. The welding torch holds the welding wire. The laser sensor irradiates the workpiece with laser light, and detects reflected light from a workpiece. The welding torch and the laser sensor are attached to a tip of the manipulator. The controller controls the manipulator to execute movement control of moving a welding position along a predetermined teaching trajectory with the laser sensor disposed in front of the welding torch in the traveling direction in a state where the welding voltage is applied between the welding wire and the workpiece. In this arc welding device, the controller specifies a position of a feature portion of the workpiece on the basis of a detection result of the reflected light by the laser sensor during execution of the movement control, and corrects the teaching trajectory so that the specified feature portion becomes the welding position.

### Citation List

### Patent Literature

PTL 1: WO 2015/146180 A

### SUMMARY OF THE INVENTION

### Technical problem

In the arc welding device disclosed in PTL 1, when an axis line of a rotary joint of the manipulator is disposed so as to pass through the welding position, an irradiation region of the laser light is separated from the feature portion due to the rotation of the rotary joint when the teaching trajectory is a curve. Therefore, there is a possibility that correction of the above-described teaching trajectory based on the detection result of the laser sensor cannot be performed.

The present disclosure has been made in view of such a point, and an object of the present disclosure is to facilitate correction of a teaching trajectory based on a detection result of a laser sensor even when the teaching trajectory is a curve in an arc welding device that moves a welding position along a predetermined teaching trajectory.

### Solution to problem

In order to achieve the above object, an arc welding device according to the present disclosure is an arc welding device that performs arc welding by applying a welding voltage between a welding wire and a workpiece, the arc welding apparatus including: a welding torch that holds the welding wire; a laser sensor that irradiates the workpiece with laser light and detects reflected light from the workpiece; a manipulator including a rotary joint that rotates about a predetermined axis line, and including a tip to which the welding torch and the laser sensor are attached with the predetermined axis passing through an irradiation region of the laser light in the workpiece; and a controller that (i) executes movement control of controlling the manipulator to move a welding position along a predetermined teaching trajectory in a state where the welding voltage is applied between the welding wire and the workpiece, (ii) specifies a position of a feature portion of the workpiece on the basis of a detection result of the reflected light by the laser sensor during execution of the movement control, and (iii) corrects the predetermined teaching trajectory so that the specified feature portion becomes the welding position.

As a result, even if the rotary joint is rotated in a state where the feature portion is located in the irradiation region of the laser light, the feature portion is hardly separated from the irradiation region of the laser light. Therefore, even when the teaching trajectory is a curve, it is easy to correct the teaching trajectory based on the detection result of the laser sensor.

### Advantageous effect of invention

According to the present disclosure, in an arc welding device that moves a welding position along a predetermined teaching trajectory, it is possible to easily correct the teaching trajectory based on a detection result of a laser sensor even when the teaching trajectory is a curve.

### BRIEF DESCRIPTION OF THE DRAWINGS

Fig. 1 is a schematic diagram illustrating an arc welding device according to an exemplary embodiment of the present disclosure.
Fig. 2 is a schematic diagram around a manipulator.
Fig. 3 is a block diagram illustrating a configuration of a control system.
Fig. 4 is a perspective view illustrating a workpiece.
Fig. 5 is a flowchart for describing an operation when the arc welding device welds a joint of a workpiece.

### DESCRIPTION OF EMBODIMENT

An exemplary embodiment of the present disclosure is described below with reference to the drawings. The following description of preferred exemplary embodiment is merely exemplary in nature and is not intended to limit the present invention, its applications, or its uses at all.

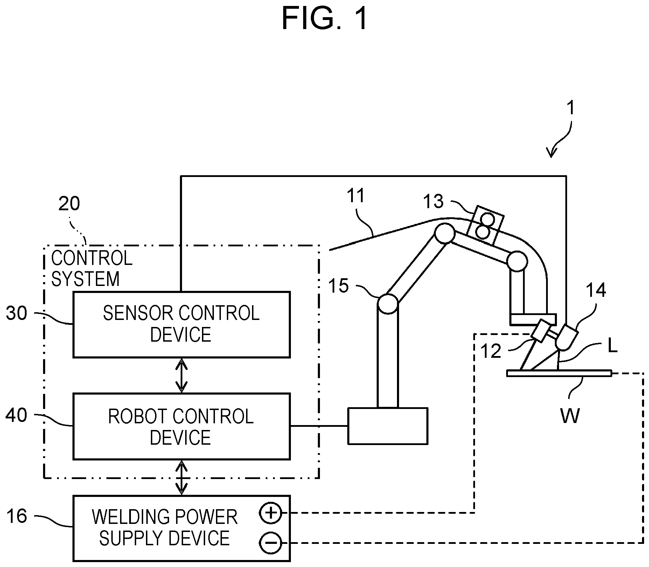

Fig. 1 illustrates arc welding device 1 according to the exemplary embodiment of the present disclosure. Arc welding device 1 performs arc welding by applying a welding voltage between welding wire 11 and workpiece W. Specifically, arc welding device 1 includes welding torch 12, wire feeding device 13, laser sensor 14, manipulator 15, welding power supply device 16, and control system 20 (a controller in the present disclosure).

Welding torch 12 holds welding wire 11.

Wire feeding device 13 feeds welding wire 11 to welding torch 12. A feeding speed of welding wire 11 by wire feeding device 13 is controlled by welding power supply device 16.

Laser sensor 14 irradiates workpiece W with laser light L and detects reflected light from workpiece W, thereby obtaining position information indicating the distance from laser sensor 14 to workpiece W.

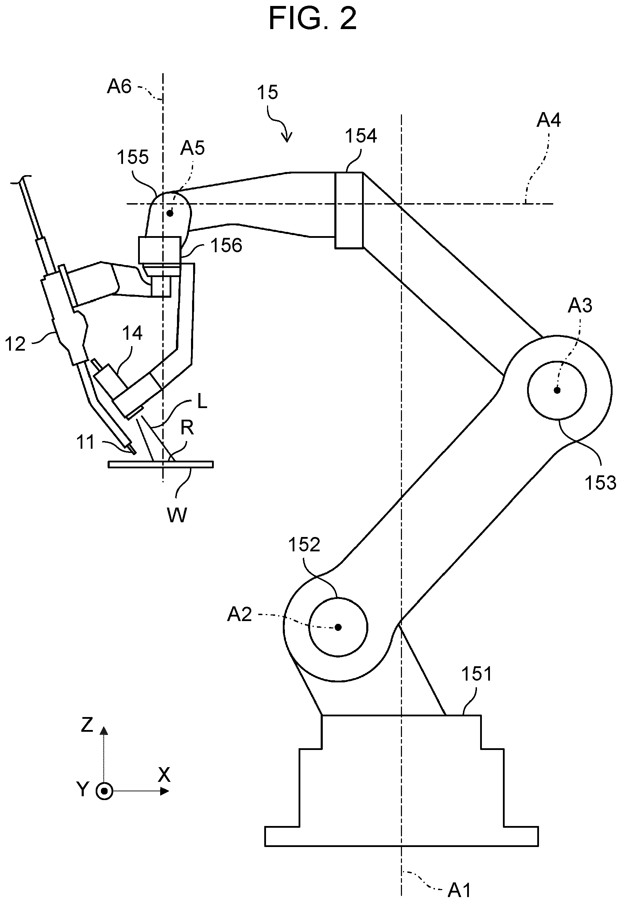

Fig. 2 is a schematic diagram around manipulator 15. As illustrated in Fig. 2, manipulator 15 is a six-axis vertical articulated robot including first to sixth rotary joints 151 to 156. First to sixth rotary joints 151 to 156 are provided in order from the proximal end (opposite distal end) side of manipulator 15. First rotary joint 151 rotates about first axis line A1. Second rotary joint 152 rotates about second axis line A2. Third rotary joint 153 rotates about third axis line A3. Fourth rotary joint 154 rotates about fourth axis line A4. Fifth rotary joint 155 rotates about fifth axis line A5. Sixth rotary joint 156 rotates about sixth axis line A6. Fourth axis line A4 is parallel to the X axis shown in Fig. 2. Second axis line A2, third axis line A3 and fifth axis line A5 are parallel to the Y-axis shown in Fig 2. First axis line A1 and sixth axis line A6 are parallel to the Z-axis shown in Fig 2.

Welding torch 12 and laser sensor 14 are attached to the tip of manipulator 15. Laser sensor 14 is disposed such that sixth axis line A6 (predetermined axis line in the present disclosure) passes through the center of irradiation region R of laser light L in workpiece W. As illustrated only in Fig. 1, wire feeding device 13 is attached to manipulator 15. Wire feeding device 13 is attached to, for example, an arm between third rotary joint 153 and fourth rotary joint 154.

Welding power supply device 16 (see Fig. 1) applies a welding voltage between welding wire 11 and workpiece W. Welding power supply device 16 is also used as an operation power supply of wire feeding device 13. Welding power supply device 16 controls a feeding speed of welding wire 11 by wire feeding device 13 (see Fig. 1).

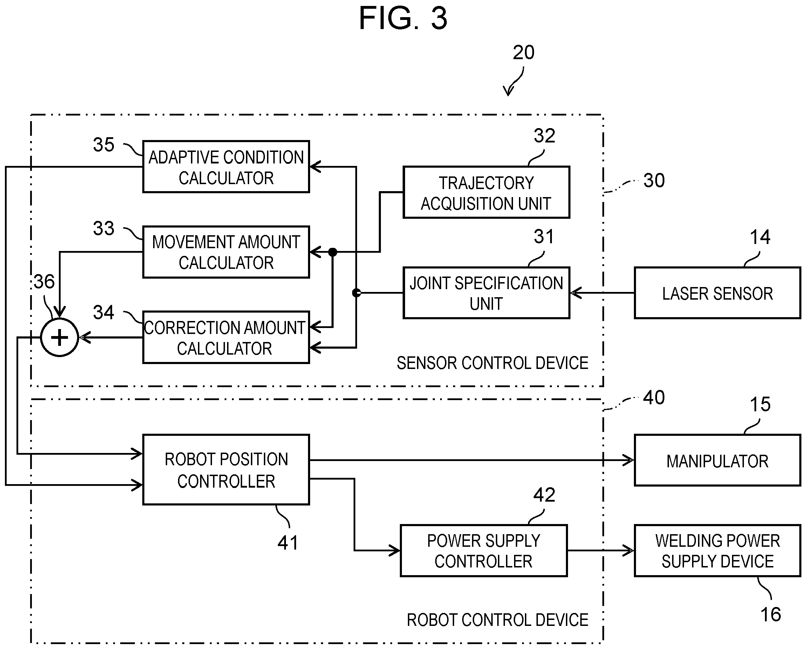

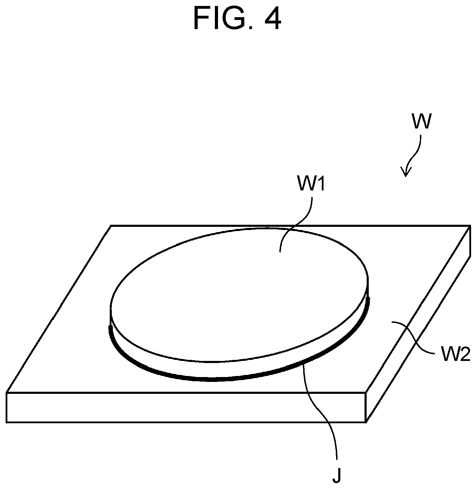

Fig. 3 is a block diagram illustrating a configuration of control system 20. Fig. 4 is a perspective view illustrating workpiece W.

In Fig. 3, control system 20 includes sensor control device 30 and robot control device 40.

Sensor control device 30 includes joint specification unit 31, trajectory acquisition unit 32, movement amount calculator 33, correction amount calculator 34, adaptive condition calculator 35, and adder 36. Sensor control device 30 is connected to laser sensor 14. As illustrated in Fig. 4, a case where workpiece W includes two members joined to each other, that is, member W1 and member W2 will be described. Joint specification unit 31 specifies the position of joint J between member W1 and member W2 as the feature portion in workpiece W on the basis of the detection result of the reflected light by laser sensor 14. The position of joint J is specified on the basis of position information obtained by laser sensor 14. In addition, joint specification unit 31 specifies the width of a gap between member W1 and member W2 on the basis of the position information obtained by laser sensor 14.

Trajectory acquisition unit 32 acquires the teaching trajectory input by the user or obtained in the past welding operation.

Movement amount calculator 33 calculates a movement amount in the three-dimensional direction from the current welding position to the next welding position in the teaching trajectory acquired by trajectory acquisition unit 32.

Correction amount calculator 34 calculates a correction amount in the three-dimensional direction for moving the corresponding portion in the teaching trajectory acquired by trajectory acquisition unit 32 to the position of joint J specified by joint specification unit 31.

Adaptive condition calculator 35 calculates the welding current, the welding voltage, and the amplitude thereof on the basis of the width of the gap between member W1 and member W2 specified by joint specification unit 31.

Adder 36 adds the correction amount calculated by correction amount calculator 34 to the movement amount calculated by movement amount calculator 33 to output the corrected movement amount.

Robot control device 40 includes robot position controller 41 and power supply controller 42. Robot controller 40 is connected to manipulator 15, welding power supply device 16, and sensor control device 20.

Robot position controller 41 controls each of rotary joints 151 to 156 of manipulator 15 so as to move the welding position by the corrected movement amount output by adder 36 of sensor control device 30.

Power supply controller 42 controls welding power supply device 16 on the basis of the welding current, the welding voltage, and the amplitude thereof calculated by adaptive condition calculator 35.

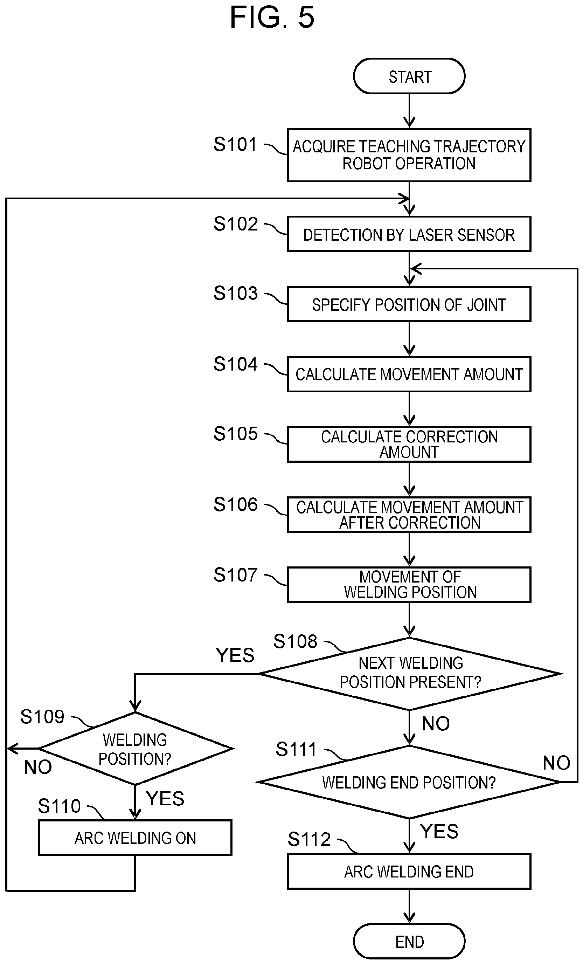

Next, an operation when arc welding device 1 configured as described above welds joint J of workpiece W illustrated in Fig. 4 will be described with reference to the flowchart of Fig. 5. Workpiece W illustrated in Fig. 4 includes two plate-like members vertically stacked in a stepped manner, that is, member W1 and member W2.

First, in step 101 (S101), trajectory acquisition unit 32 acquires a teaching trajectory. Then, movement amount calculator 33 calculates the movement amount of the tip of manipulator 15 in the three-dimensional direction from the current position to the position where laser light L from laser sensor 14 can be irradiated to a welding start position in the teaching trajectory acquired by trajectory acquisition unit 32 in step 101 (S101). At this time, correction amount calculator 34 does not calculate the correction amount. Then, robot position controller 41 controls each of rotary joints 151 to 156 of manipulator 15 so as to move the welding position by the movement amount calculated by movement amount calculator 33. As a result, laser sensor 14 moves to a position where laser light L can be irradiated to the welding start position in the teaching trajectory acquired by trajectory acquisition unit 32 in step 101 (S101).

Next, in step 102 (S102), laser sensor 14 irradiates workpiece W with laser light L and detects reflected light from workpiece W.

In step 103 (S103), joint specification unit 31 specifies the position of joint J as the feature portion in workpiece W on the basis of the detection result of the reflected light by laser sensor 14.

In step 104 (S104), movement amount calculator 33 calculates the movement amount in the three-dimensional direction from the welding position corresponding to the current position of welding torch 12 to the next welding position in the teaching trajectory acquired by trajectory acquisition unit 32 in step 101 (S101).

In step 105 (S105), correction amount calculator 34 calculates the correction amount in the three-dimensional direction for moving the corresponding portion in the teaching trajectory acquired by trajectory acquisition unit 32 in step 101 (S101) to the position of joint J specified by joint specification unit 31 in step 103 (S103).

In step 106 (S106), adder 36 adds the correction amount calculated by correction amount calculator 34 in step 105 (S105) to the movement amount calculated by movement amount calculator 33 in step 104 (S104), thereby outputting the corrected movement amount.

In step 107 (S107), robot position controller 41 controls rotary joints 151 to 156 of manipulator 15 so as to move the welding position corresponding to the position of welding torch 12 by the corrected movement amount output by adder 36 in step 106 (S106). As a result, the movement trajectory of the welding position becomes a trajectory obtained by correcting the teaching trajectory acquired by trajectory acquisition unit 32 by the correction amount calculated by correction amount calculator 34. Then, joint J specified by joint specification unit 31 is the welding position.

In step 108 (S108), movement amount calculator 33 determines whether or not the next welding position is present in the teaching trajectory. When it is determined that the next welding position is present, the process proceeds to step 109 (S109). When it is determined that the next welding position is not present, the process proceeds to step 111 (S111).

In step 109 (S109), robot position controller 41 determines whether or not the welding position corresponding to the current position of welding torch 12 is a desired welding position. When it is determined that the welding position is not the desired welding position, the process returns to step 102 (S102). When it is determined that the welding position is the desired welding position, the process proceeds to step 110 (S110).

In step 110 (S110), power supply controller 42 causes welding power supply device 16 to apply a welding voltage between welding wire 11 and workpiece W. Welding power supply device 16 feeds welding wire 11 to wire feeding device 13. As a result, arc welding is performed.

In step 111 (S111), movement amount calculator 33 determines whether or not the welding position corresponding to the current position of welding torch 12 is the welding end position in the teaching trajectory acquired by trajectory acquisition unit 32 in step 101 (S101). When it is determined that the welding position is the welding end position, the process proceeds to step 112 (S112). When it is determined that the welding position is not the welding end position, the process returns to step 103 (S103).

In step 112 (S112), power supply controller 42 causes welding power supply device 16 to end applying the welding voltage between welding wire 11 and workpiece W. As a result, arc welding ends.

As described above, control system 20 executes the movement control to move the welding position along the predetermined teaching trajectory by controlling manipulator 15 in a state where the welding voltage is applied between welding wire 11 and workpiece W, and specifies the position of joint J of workpiece W on the basis of the detection result of the reflected light by laser sensor 14 during the execution of the movement control, and corrects the teaching trajectory so that the specified feature portion becomes the welding position.

If sixth axis line A6 of manipulator 15 does not pass through irradiation region R of laser light L by laser sensor 14 but passes, for example, near the tip of welding wire 11, irradiation region R of laser light L is separated from joint J by the rotation of sixth rotary joint 156, and there is a possibility that the above-described correction of the teaching trajectory based on the detection result of laser sensor 14 cannot be performed.

On the other hand, in the present embodiment, sixth axis line A6 of manipulator 15 passes through the center of irradiation region R of laser light L in workpiece W. Therefore, even if sixth rotary joint 156 is rotated in a state where joint J is located in irradiation region R of laser light L, joint J is not separated from irradiation region R of laser light L. Therefore, even when the teaching trajectory is a curve, the teaching trajectory can be corrected based on the detection result of laser sensor 14.

In the above embodiment, sixth axis line A6 of manipulator 15 passes through the center of irradiation region R of laser light L in workpiece W. However, even if sixth axis line A6 is at a position deviated from the center in irradiation region R of laser light L in workpiece W, sixth axis line A6 may pass through irradiation region R. Even in such a case, as compared with a case where sixth axis line A6 does not pass through irradiation region R of laser light L, joint J is less likely to be separated from irradiation region R of laser light L due to the rotation of sixth rotary joint 156.

### INDUSTRIAL APPLICABILITY

The arc welding device and the arc welding method of the present disclosure can easily correct the teaching trajectory based on the detection result of the laser sensor even when the teaching trajectory is a curve in the arc welding device that moves the welding position along a predetermined teaching trajectory. Therefore, it is useful as an arc welding device and an arc welding method that perform arc welding by applying a welding voltage between a welding wire and a workpiece.

### REFERENCE MARKS IN THE DRAWINGS

- 1: arc welding device
- 11: welding wire
- 12: welding torch
- 14: laser sensor.
- 15: manipulator
- 20: control system (controller)
- 156: sixth rotary joint
- A6: sixth axis line
- J: joint
- L: laser light
- R: irradiation region
- W: workpiece

## Claims

1. An arc welding device that performs arc welding by applying a welding voltage between a welding wire and a workpiece, the arc welding device comprising:
a welding torch that holds the welding wire;
a laser sensor that irradiates the workpiece with laser light and detects reflected light from the workpiece;
a manipulator including a rotary joint that rotates about a predetermined axis line, and including a tip to which the welding torch and the laser sensor are attached with the predetermined axis line passing through an irradiation region of the laser light in the workpiece; and
a controller that (i) executes movement control of controlling the manipulator to move a welding position along a predetermined teaching trajectory in a state where the welding voltage is applied between the welding wire and the workpiece, (ii) specifies a position of a feature portion of the workpiece on a basis of a detection result of the reflected light by the laser sensor during execution of the movement control, and (iii) corrects the predetermined teaching trajectory to cause the specified feature portion to become the welding position.

2. The arc welding device according to Claim 1, wherein the predetermined axis line passes through a center of the irradiation region of the laser light.

3. An arc welding method for performing arc welding by applying a welding voltage between a welding wire and a workpiece, the arc welding method comprising:
by using an arc welding device including:
a welding torch that holds the welding wire;
a laser sensor that irradiates the workpiece with laser light and detects reflected light from the workpiece; and
a manipulator including a rotary joint that rotates about a predetermined axis line and including a tip to which the welding torch and the laser sensor are attached,
executing movement control of controlling the manipulator to move a welding position along a predetermined teaching trajectory in a welding state where the welding voltage is applied between the welding wire and the workpiece, and the predetermined axis line passes through an irradiation region of the laser light in the workpiece, and specifying a position of a feature portion of the workpiece on a basis of a detection result of the reflected light by the laser sensor during execution of the movement control; and
correcting the predetermined teaching trajectory to cause the specified feature portion to become the welding position.

4. The arc welding method according to Claim 3, wherein in the welding state, the predetermined axis line passes through a center of the irradiation region of the laser light.
